# EUROPÄISCHE PATENTSCHRIFT

(11) **EP 1 607 665 B1**
(45) Veröffentlichungstag und Bekanntmachung des Hinweises auf die Patenterteilung: **05.03.2008**
(21) Anmeldenummer: 04015571.5
(22) Anmeldetag: 02.07.2004
(51) Int. Cl.: F16L 3/18

(54) **System zur Aufhängung von Rohren, Leitungen oder dergleichen an einer Decke**
System for suspending pipes, conduits or the like at a sealing
Dispositif pour la suspension des tuyaux, conduits ou similaires au plafond

(30) Priorität: 16.06.2004 DE 4009557
(43) Veröffentlichungstag der Anmeldung: 21.12.2005
(73) Patentinhaber: WOPF Befestigungselemente GmbH, 21339 Lüneburg (DE)
(72) Erfinder: Boenert, Stephan, Dipl.-Ing., 21376 Salzhausen (DE)
(74) Vertreter: Hauck Patent- und Rechtsanwälte

(56) Entgegenhaltungen:
- EP-A- 0 328 909
- DE-U- 20 001 331
- US-A- 2 384 158
- US-A- 4 901 958

## Beschreibung

Die Erfindung bezieht sich auf ein System zur Aufhängung von Rohren, Leitungen oder dergleichen an einer Decke, insbesondere der Decke eines Containers nach Anspruch 1.

Es ist bekannt, Container zur Errichtung von Gebäuderäumen zu verwenden. In derartigen Räumen ist naturgemäß die Versorgung mit elektrischer Energie und Wasser erforderlich. Hierzu sind entsprechende Leitungen in den Containerräumen zu verlegen. Unter Umständen kommen weitere Leitungen für Lüftung, Air-condition und so weiter hinzu.

Aus US-A-2,384,158 ist ein System zur Aufhängung von Rohren, Leitungen oder dergleichen an einer Decke der eingangs genannten Art bekannt geworden. Die Querstrebe weist in die Vertikale gebogene Endabschnitte auf, die verstellbar mit den an der Decke befestigten Strebenabschnitten zusammenwirken, um eine Höhenverstellung der Querstrebe zu bewirken. Einzelne Schlaufen, welche die Rohre oder Leitungen umschlingen, werden an einem Element festgelegt, das im U-förmigen Kanal der Querstrebe festlegbar ist. Ein Mechanismus für eine Vertikalverstellung der Schlaufen ist nicht vorgesehen.

Aus EP-A-0 328 909 ist eine Haltevorrichtung für Rohrschellen bekannt geworden, bei der Winkelelemente an einer Decke oder Wand befestigbar sind, wobei jeweils zwei teleskopisch zusammenwirkende Winkelelemente zwecks Höhenverstellung zusammenwirken. Die Winkelelemente halten einen Führungsring für einen horizontal verstellbaren Schlitten. Die unteren Teile der Schellen sind mittels Gewindestange höhenverstellbar am Schlitten angebracht.

Der Erfindung liegt die Aufgabe zugrunde, ein System zur Aufhängung von Rohren, Leitungen oder dergleichen an einer Decke zu schaffen, das aus einfachen Teilen besteht, die einfach montierbar sind und insbesondere für die Anbringung in Containern geeignet sind.

Diese Aufgabe wird durch die Merkmale des Anspruchs 1 gelöst.

Beim erfindungsgemäßen System sind wie an sich bekannt mindestens zwei an beabstandeten Orten an der Decke anbringbare - in ihrer Länge verstellbare - vertikale Streben vorgesehen, an deren unterem Ende eine Querstrebe anbringbar ist. Das obere Ende wird vorzugsweise mit der Decke durch Schrauben verbunden. Die Höhenverstellbarkeit der Querstrebe ermöglicht daher die Anbringung in verschiedenen gewünschten Höhenpositionen.

Auf der Oberseite der Querstrebe ist mindestens ein Lagerbauteil befestigbar, das eine quer zur Querstrebe verlaufende horizontale Führung aufweist. Die Führung führt einen Schlitten, an dem mindestens ein Halteelement angebracht ist mit einem Halteabschnitt, der ein Rohr oder eine Leitung zumindest teilweise umgreift. Der Halteabschnitt kann nach einer Ausgestaltung der Erfindung eine Rohrschelle oder dergleichen sein. Der Schlitten erlaubt eine Längenänderung des Rohrs bzw. des Kabels oder dergleichen, ohne dass es eine Durchbiegung erfährt oder Teile des Haltesystems verformt werden.

Der Schlitten nach der Erfindung weist einen aufrechten Führungsansatz auf, und das Halteelement ist vertikal beweglich im Führungsansatz geführt. Führungsansatz und Halteelement haben ein unrundes Querschnittprofil und wirken teleskopisch zusammen. Zwischen diesen beiden Teilen wirkt ein Klemm-Mechanismus, um das Halteelement in einer gewünschten Höhenposition klemmend festzulegen. Zu diesem Zweck kann das Halteelement als im Querschnitt C-förmig ausgebildet sein und der Klemm-Mechanismus aus einer Schiebemutter und einem Schraubenbolzen bestehen.

Die Längenveränderung der vertikalen Strebe kann mit Hilfe von zwei teleskopisch zusammenwirkenden Teilen erfolgen, wobei ein Klemm-Mechanismus die beiden Teleskopteile in einer gewünschten relativen Position festlegen kann. Der Klemm-Mechanismus kann nach einer weiteren Ausgestaltung der Erfindung aus einer sogenannten Schiebemutter und einem Schraubenbolzen bestehen. Zu diesem Zweck ist ein Strebenteil als C-förmige Schiene mit nach innen gebogenem Rand im Schlitzbereich ausgebildet, wobei die Schiebemutter sich innerhalb der Schiene bewegt, während der Schraubenbolzen durch eine Öffnung des äußeren Teleskopteils und den Schlitz hindurchgeführt und in die Schiebemutter eingeschraubt wird. Ein derartiger Klemm-Mechanismus ist seit langem bekannt und dient zur Anbringung von Teilen an der Decke oder einer Wand von Gebäuden, wobei die C-förmige Schiene an der Wand bzw. der Decke ortsfest angebracht ist.

Nach einer Ausgestaltung der Erfindung ist auch die Querstrebe als C-förmige Schiene ausgebildet, und das Lagerbauteil wird mit Hilfe des bereits beschriebenen Klemm-Mechanismus an der Querstrebe in einer gewünschten Position befestigt. Die Querstrebe kann nach einer weiteren Ausgestaltung der Erfindung auch als Doppel-C-Schiene ausgebildet sein mit einem auch nach unten weisendem Schlitz in dem zweiten Schienenabschnitt. Auf diese Weise ist es möglich, an der Querstrebe weitere Bauteile mit Hilfe des beschriebenen Klemm-Mechanismus zu befestigen.

Nach einer weiteren Ausgestaltung der Erfindung weist die Führung des Lagerbauteils zwei parallele Führungskanäle auf, deren Öffnungen einander zugekehrt sind. Am Schlitten sind zwei parallele Führungsleisten ausgebildet, die von den Führungskanälen aufgenommen sind. Die Führungskanäle können von Einsätzen aus Kunststoff gebildet sein, die in entsprechend geformte, im Querschnitt U-förmige Ansätze des Lagerbauteils eingesetzt sind. Die Kunststoffeinsätze verringern die Gleitreibung und dämpfen die Geräuschübertragung.

Der Klemm-Mechanismus aus Schiebemutter und Schraubenbolzen für das Halteelement kann vormontiert sein, wobei die Öffnung im jeweils äußeren Teil der Verbindung so geformt ist, dass die Schiebemutter hindurchpaßt. Die Längsausrichtung dieser Öffnung ist dann zu dem Schlitz in der jeweiligen C-förmigen Schiene ausgerichtet. Durch Drehung der Schiebemutter um einen Winkel kann die Schiebemutter nach dem Hindurchstecken durch den Schlitz den nach unten abgebogenen Rand untergreifen, wonach der Schraubenbolzen festgezogen wird, um die zusammenwirkenden Teile festzuklemmen. Es ist jedoch auch bereits bekannt, zwischen Schiebemutter und Schraubenbolzen eine Federanordnung vorzusehen, um nach dem Einsetzen und Verdrehen der Schiebemutter eine vorläufige Festlegung zu erreichen. Eine derartige Befestigungsanordnung ist zum Beispiel aus EP 1 039 155 bekannt geworden. Die vorliegende Anmeldung bezieht sich insbesondere auf den Klemm-Mechanismus bzw. Befestigungsanordnung nach diesem europäischen Patent.

Die Erfindung soll nachfolgen anhand eines in Zeichnungen dargestellten Ausführungsbeispiels näher erläutert werden.
Fig. 1 zeigt perspektivisch ein System nach der Erfindung.
Fig. 2 zeigt perspektivisch eine vertikale Strebe des Systems nach Figur 1.
Fig. 3 zeigt eine erste Seitenansicht der Strebe nach Figur 2.
Fig. 4 zeigt eine um 90° verdrehte Seitenansicht der Strebe nach Figur 2.
Fig. 5 zeigt die Druntersicht unter die Strebe nach Fig. 2.
Fig. 6 zeigt perspektivisch ein Lagerbauteil des Systems nach Fig. 1 mit zwei Rohrschellen.
Fig. 7 zeigt die Draufsicht auf das Lagerbauteil nach Fig. 6.
Fig. 8 zeigt eine erste Seitenansicht des Lagerbauteils nach Fig. 6.
Fig. 9 zeigt eine um 90° verdrehte Seitenansicht des Lagerbauteils nach Fig. 6.

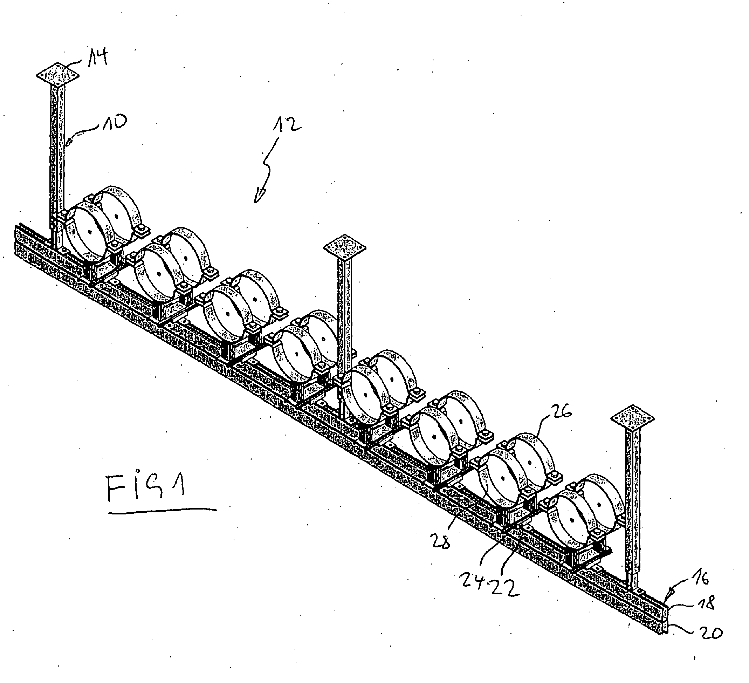

In Figur 1 sind drei vertikale Streben 10 eines Aufhängesystems 12 zu erkennen. Am oberen Ende weisen die parallel beabstandeten vertikalen Streben 10 eine Platte 14 auf, mit deren Hilfe sie an einer Decke, beispielsweise einer Decke eines Containers, angebracht werden können, beispielsweise durch Verschraubung. Am unteren Ende sind die vertikalen Streben 10 mit einer Doppel-C-Schiene 16 verbunden, die C-förmigen Schienenabschnitte 18, 20 sind derart, dass ihre Schlitze auf gegenüberliegenden Seiten liegen. Die Schlitze weisen nach innen gebogene Ränder auf, wie dies bei C-Schienen zu Installationszwecken an sich bekannt ist (EP 1039 155). An dem oberen Schienenabschnitt 18 der Querstrebe 16 sind in Abständen acht Lagerbauteile 22 angebracht. Jedes Lagerbauteil 22 besitzt eine Führung, die nachfolgend näher beschrieben wird und die einen Schlitten 24 verschiebbar lagert, wobei die Verschieberichtung senkrecht zur Querstrebe 16 ist. An dem Schlitten sind jeweils im Abstand zwei Schellen 26, 28 angebracht, welche um Leitungen, Rohre, Kabel oder dergleichen klemmend herumgelegt werden können. Einzelheiten des Systems 12 werden nachfolgend anhand weiterer Figuren beschrieben.

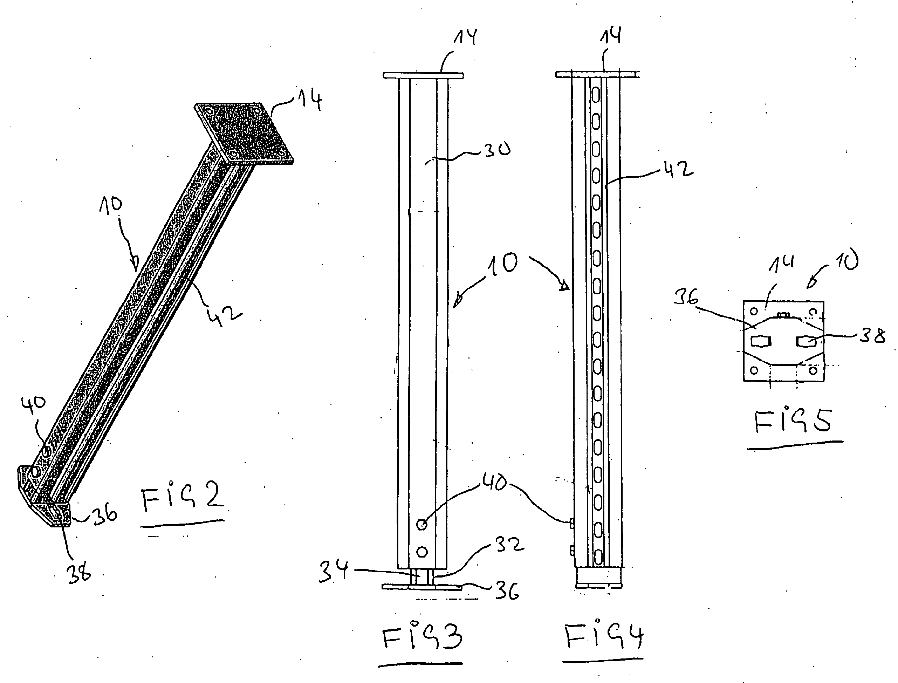

Wie aus den Figuren 2 bis 4 hervorgeht, bestehen die Streben 10 aus einem äußeren oberen Teleskopteil 30 und einem inneren unteren Teleskopteil 32. Sie haben komplementäre Rechteckquerschnitte, wobei das äußere Teleskopteil 30 rohrförmig geschlossen ist, während das untere Teleskopteil 32 im Querschnitt C-förmig ist mit nach innen gebogenen Rändern im Bereich des Schlitzes 34. Am Fuß des unteren inneren Teleskopteils 32 ist eine doppeltrapezförmige Platte 36 angebracht, wie aus den Figuren 2 und 5 hervorgeht, die auf gegenüber liegenden Seiten des Teleskopteils 32 schlüssellochförmige Öffnungen 38 aufweist.

Innerhalb des inneren unteren Teleskopteils 32 ist eine Schiebemutter angebracht (nicht zu erkennen), deren Längserstreckung quer zur Längserstreckung des Teleskopteils 32 verläuft und dadurch die nach innen gebogenen Ränder des C-förmigen Teleskopteils 32 untergreift. Die Schiebemutter wirkt mit einem Schraubenbolzen 40 zusammen, der durch eine Öffnung im oberen äußeren Teleskopteil 30 und den Schlitz 34 hindurchgesteckt und in die Schiebemutter eingeschraubt ist, um die beiden Teleskopteile 30, 32 in einer beliebigen Relativstellung gegeneinander klemmend festzulegen. In den Figuren 2 und 3 sind zwei Schraubenbolzen 40 dargestellt, die jeweils mit einer Schiebemutter zusammenwirken, um eine besonders hohe Klemmkraft aufzubringen. Derartige Klemm-Mechanismen sind, wie mehrfach erwähnt, an sich bekannt (beispielsweise aus EP 1 039 155).

Aus den Figuren 2 bis 4 ist ferner zu erkennen, dass auf gegenüber liegenden Seiten des äußeren Teleskopteils 30 im Schnitt C-förmige Schienen 42 angebracht sind. Sie dienen dazu, mit Hilfe geeigneter Befestiger, wie sie oben bereits beschrieben worden sind, zusätzliche Bauteile an den vertikalen Streben 10 anzubringen.

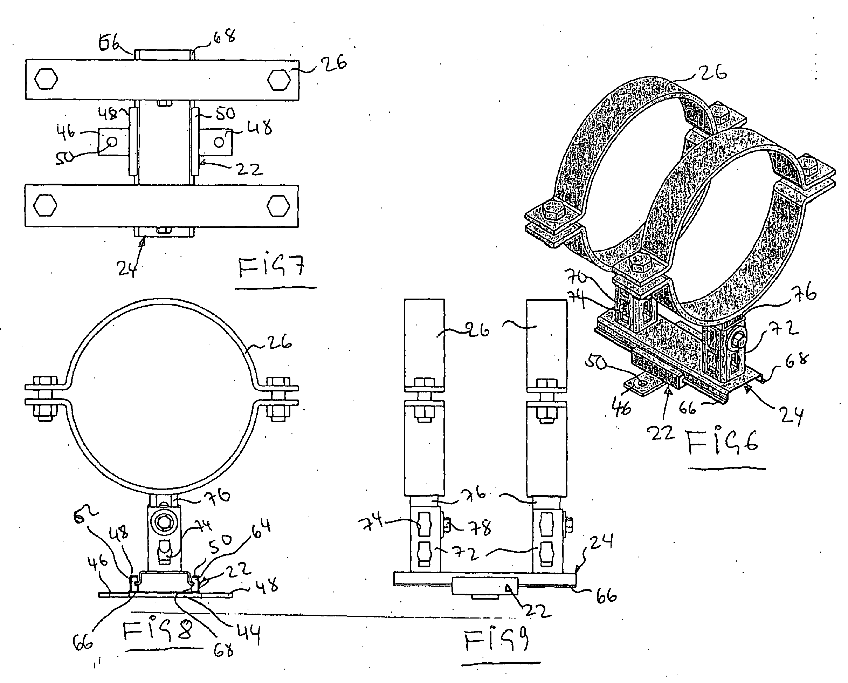

In den Figuren 6 bis 9 ist das Lagerbauteil 22 deutlicher erkennbar, wie es mit dem C-Schienenabschnitt 18 der Querstrebe 16 verbunden werden kann. Das Lagerbauteil 22 weist eine annähernd rechteckige Platte 44 auf, die auf gegenüber liegenden Seiten flache Ansätze 46, 48 aufweist, mit jeweils einem Loch 50. Die Ansätze 46, 48 liegen auf dem C-Schienenabschnitt 18 auf, und mit Hilfe eines Schraubenbolzens (nicht gezeigt) und einer Schiebemutter (nicht gezeigt) innerhalb des C-Schienenabschnitts 18 kann daher das Lagerbauteil 22 an der Querstrebe 16 befestigt werden, und zwar an einem beliebigen Ort in Längserstreckung der Querstrebe 18. An der Platte 44 sind parallel beabstandete U-förmige Abschnitte 48, 50 angeformt bzw. angebracht, wobei die Öffnungen einander zugekehrt sind. In die Abschnitte 48, 50 sind Kunststoffeinsätze 62, 64 eingesetzt, die parallele Führungskanäle bilden. Die parallelen, einander zugekehrten Führungskanäle dienen zur Aufnahme von parallel beabstandeten Führungsleisten 66, 68 des Schlittens 24, wobei der Schlitten 24 insgesamt annähernd U-förmige Gestalt im Querschnitt aufweist und die Führungsleisten 66, 68 als nach außen gebogene Abschnitte am Ende der Schenkel des U-Profils ausgebildet sind. Der Schlitten 24 kann mithin innerhalb der Führungskanäle frei verschoben werden.

### Auf dem Steg des U-förmigen Schlittens 24 sind zwei parallele aufrecht stehende

U-Profile 70, 72 im Abstand zueinander angebracht. Ihre Schenkel und Stege weisen jeweils zwei Schlüssellochöffnungen 74 auf, vergleichbar den Öffnungen 38 in den Figuren 2 und 5. Die Schellen 26 bestehen aus einer oberen und einer unteren Hälfte. Mit der unteren Hälfte ist an der Außenseite ein Halteschienenabschnitt 76 verbunden, der im Querschnitt ein C-Profil ist, wie es weiter oben bereits beschrieben wurde. Das C-Profil des Schienenabschnitts 26 paßt annähernd in die U-Profile 72, 74. In den Figuren ist ferner ein Schraubenbolzen 78 zu erkennen, der in eine Schiebemutter (nicht gezeigt) innerhalb des C-Profil-Schienenabschnitts 76 eingeschraubt ist, um die Schelle 26 in einer gewünschten Höhe relativ zum Schlitten 24 klemmend festzulegen. Die Klemmbefestigung ist wiederum die gleiche, wie sie oben bereits mehrfach beschrieben wurde.

Wie erkennbar, kann mit Hilfe des beschriebenen Systems die Relativlage der Schellen in Grenzen beliebig eingestellt werden, wobei die Schellenpaare 26 jedes Schlittens 24 mit dem aufgenommenen Rohr, Kabel oder dergleichen, eine Längsbewegung im Lagerbauteil 22 ausführen kann.

## Patentansprüche

1. System zur Aufhängung von Rohren, Leitungen oder dergleichen an einer Decke, insbesondere der Decke eines Containers, mit den folgenden Merkmalen:
• mindestens zwei an beabstandeten Orten an der Decke anbringbare, in der Länge verstellbare, vertikale Streben (10),
• eine Querstrebe (16), die an den unteren Enden der vertikalen Streben (10) anbringbar ist und
• mindestens ein Lagerbauteil (22), das an unterschiedlichen Orten an der Oberseite der Querstrebe (16) befestigbar ist und das mindestens ein Halteelement (76) mit einem Halteabschnitt (26) hält, der ein Rohr oder eine Leitung oder dergleichen zumindest teilweise umgreift,
**dadurch gekennzeichnet**,
• dass das Lagerbauteil (22) eine quer zur Querstrebe (16) verlaufende, horizontale Führung aufweist, ein Schlitten (24) in der Führung frei verschiebbar gelagert ist und mindestens einen aufrechten Führungsansatz (72) aufweist, wobei das mindestens eine Halteelement (76) mit seiner Achse parallel zur Führung verläuft und dass ferner das Halteelement (76) vertikal bewegbar im Führungsansatz (72) geführt ist, Führungsansatz (72) und Halteelement (76) ein unrundes Querschnittsprofil aufweisen und teleskopisch zusammenwirken und zwischen Führungsansatz (72) und Halteelement (76) ein Klemm-Mechanismus (78) wirkt, um das Halteelement (76) in beliebigen Höhenpositionen am Führungsansatz (72) klemmend festzulegen.

2. System nach Anspruch 1, **dadurch gekennzeichnet, dass** die vertikalen Streben (10) aus zwei teleskopischen Teilen (30, 34) bestehen, die mit einem unrunden Querschnittsprofil ineinander geschoben sind und ein Klemm-Mechanismus an dem äußeren Teleskopteil (30) angebracht ist zur klemmenden Festlegung des inneren Teleskopteils (34) in beliebigen Relativpositionen.

3. System nach Anspruch 2, **dadurch gekennzeichnet, dass** das innere Teleskopteil (34) als C-förmige Schiene mit nach innen gebogenem Rand im Stützbereich der C-Schiene ausgebildet ist, die in ein komplementäres Querschnittsprofil des äußeren Teleskopteils (30) eingreift und der Klemm-Mechanismus eine Schiebemutter aufweist, die innerhalb der C-Schiene verschiebbar ist und ein Schraubenbolzen (40) über ein Loch im äußeren Teleskopteil (30) in die Schiebemutter einschraubbar ist.

4. System nach Anspruch 2 oder 3, **dadurch gekennzeichnet, dass** auf der dem Schlitz gegenüberliegenden Seite der C-Schiene mehrere Löcher vorgesehen sind zur Anbringung von weiteren Bauteilen.

5. System nach einem der Ansprüche 1 bis 4, **dadurch gekennzeichnet, dass** die Querstrebe (16) als C-förmige Schiene (18) mit nach oben weisendem Schlitz ausgebildet ist, wobei im Schlitzbereich nach innen gebogene Ränder vorgesehen sind, das untere Ende der vertikalen Strebe (10) mindestens einen seitlichen Ansatz (36) mit einem Loch (38) aufweist, eine Schiebemutter in der C-förmigen Schiene (18) verschiebbar ist und ein durch das Loch (38) in dem seitlichen Ansatz (36) hindurchführbarer Schraubenbolzen in die Schiebemutter einschraubbar ist.

6. System nach Anspruch 5, **dadurch gekennzeichnet, dass** die Querstrebe (16) als Doppel-C-Schiene ausgebildet ist mit nach unten weisendem Schlitz im zweiten Schienenabschnitt (20).

7. System nach Anspruch 5 oder 6, **dadurch gekennzeichnet, dass** das Lagerbauteil (22) auf gegenüberliegenden Seiten der Führung Lageransätze (46, 48) mit einem Loch (50) aufweist, durch das Loch (50) ein Schraubenbolzen hindurchführbar ist, der in eine Schiebemutter in der C-förmigen Schiene (18) einschraubbar ist.

8. System nach einem der Ansprüche 1 bis 7, **dadurch gekennzeichnet, dass** die Führung zwei parallele Führungskanäle aufweist, deren Öffnungen einander zugekehrt sind und am Schlitten (24) zwei parallel beabstandete Schiebeleisten (66, 68) vorgesehen sind, die annähernd passend in den Führungskanälen aufgenommen sind.

9. System nach Anspruch 8, **dadurch gekennzeichnet, dass** in U-förmigen Abschnitten (48, 50) des Lagerbauteils (22) Einsätze (62, 64) aus Kunststoff eingesetzt sind, in welchen die Führungskanäle ausgebildet sind.

10. System nach einem der Ansprüche 1 bis 9, **dadurch gekennzeichnet, dass** das Halteelement (76) einen C-förmigen Querschnittsprofilabschnitt aufweist, mit einem nach innen gebogenen Rand im Schlitzbereich und der Führungsansatz (72) eine Öffnung (74) aufweist für einen Schraubenbolzen (78), der in eine Schiebemutter in den C-Profilabschnitt einschraubbar ist.

11. System nach einem der Ansprüche 1 bis 10, **dadurch gekennzeichnet, dass** der Halteabschnitt (76) eine Rohrschelle (76) trägt.

12. System nach den Ansprüchen 3, 4, 5, 7 oder 10, **dadurch gekennzeichnet, dass** Schraubenbolzen und Schiebemutter als vormontierbare Einheit vorgesehen sind und ein Langloch im äußeren Teleskopteil bzw. Ansatz parallel zum Schlitz des C-förmigen Schienenteils verläuft, wodurch die längliche Schiebemutter durch das Langloch hindurch in das Innere des C-förmigen Schienenteils einführbar ist.

13. System nach Anspruch 12, **dadurch gekennzeichnet, dass** zwischen dem Kopf des Schraubenbolzens und der Schiebemutter eine Federanordnung wirkt, wodurch das C-förmige Schienenteil vorläufig klemmend festlegbar ist, bevor durch Anziehen des Schraubenbolzens eine endgültige Festlegung erfolgt.

14. System nach einem der Ansprüche 2 bis 13, **dadurch gekennzeichnet, dass** an der Außenseite des äußeren Teleskopteils (30) eine C-förmige Schiene (42) mit nach innen gebogenem Rand im Schlitzbereich parallel zur Achse des Teleskopteils (30) angebracht ist.

15. System nach einem der Ansprüche 3 bis 14, **dadurch gekennzeichnet, dass** auf der dem Schlitz gegenüberliegenden Seite der C-Schiene mehrere Löcher vorgesehen sind zur Anbringung von weiteren Bauteilen.

16. System nach einem der Ansprüche 1 bis 15, **dadurch gekennzeichnet, dass** das Lagerbauteil (22) auf gegenüberliegenden Seiten der Führung Lageransätze (46, 48) mit einem Loch (50) aufweist, durch das Loch (50) ein Schraubenbolzen hindurchführbar ist, der in eine Schiebemutter in einer C-förmigen Schiene (18) einschraubbar ist.

17. System nach einem der Ansprüche 1 bis 16, **dadurch gekennzeichnet, dass** die Führung zwei parallele Führungskanäle aufweist, deren Öffnungen einander zugekehrt sind und am Schlitten (24) zwei parallel beabstandete Schiebeleisten (66, 68) vorgesehen sind, die annähernd passend in den Führungskanälen aufgenommen sind.

## Claims

1. System for suspending pipes, conduits or the like at a sealing, in particular a sealing of a container, with the following characteristics:
• at least two length-adjustable struts (10) that can be attached to the sealing at spaced locations,
• a diagonal strut (16), which can be attached to the bottom ends of the vertical struts (10) and
• at least one bearing component (22), which can be attached at different locations on the top side of the diagonal strut (16) and that holds at least one holding element (76) with a holding section (26), which surrounds a tube or a line or the like at least partially, **characterized in that**,
the bearing component (22) has a horizontal guide running diagonal to the diagonal strut (16), a carriage (24) is mounted in the guide in a freely shiftable manner and has at least one upright guide socket (72), wherein the at least one holding element (76) with its axis runs parallel to the guide and furthermore **in that** the holding element (76) is guided in a vertically moveable manner in the guide socket (72), the guide element (72) and holding element (76) have a non-round cross-sectional profile and work together telescopically and a clamping mechanism operates between the guide socket (72) and the holding element (76) in order to immobilize in a clamping manner the holding element (76) in any height positions on the guide socket (72).

2. System according to claim 1, **characterized in that** the vertical struts (10) consist of two telescopic parts (30, 34), which are pushed into each other with a non-round cross-sectional profile, a clamping mechanism is attached to the outer telescoping part (30) for the clamping immobilization of the inner telescoping part (34) in any relative positions.

3. System according to claim 2, **characterized in that** the inner telescoping part (34) is designed as a C-shaped rail with an inward bent edge in the support area of the C rail, which engages into a complementary cross-sectional profile of the outer telescoping part (30) and the clamping mechanism has a sliding nut, which can be pushed within the C rail and a screw bolt (40) that can be screwed into the sliding nut via a hole in the outer telescoping part (30).

4. System according to claim 2 or 3, **characterized in that** several holes are provided on the side of the C rail lying opposite the slit for the attachment of further components.

5. System according to one of claims 1 through 4, **characterized in that** the diagonal strut (16) is designed as a C-shaped rail (18) with an upwards pointing slit, wherein inward bent edges are provided in the slit area, the bottom end of the vertical strut (10) has at least one lateral appendage (36) with a hole (38), a sliding nut can be pushed into the C-shaped rail (18) and a screw bolt that can be inserted through the hole (38) in the lateral appendage (36) can be screwed into the sliding nut.

6. System according to claim 5, **characterized in that** the diagonal strut (16) is designed as a double C rail with a downward pointing slit in the second rail section (20).

7. System according to claim 5 or 6, **characterized in that** the bearing component (22) on opposite-lying sides of the guide has bearing appendages (46, 48) with a hole (50), a screw bolt can be inserted through the hole (50), which can be screwed into a sliding nut in the C-shaped rail (18).

8. System according to one of claims 1 through 7, **characterized in that** the guide has two parallel guide channels, the openings of which are pointed towards each other and two parallel distanced sliding bars (66, 68) are provided on the carriage (24), which are almost suitably received in the guide channels.

9. System according to claim 8, **characterized in that** inserts (62, 64) made of plastic are used in the U-shaped sections (48, 50) of the bearing component (22), in which the guide channels are designed.

10. System according to one of claims 1 through 9, **characterized in that** the holding element (76) has a C-shaped cross-sectional profile section, with an inwards bent edge in the slit area and the guide appendage (72) has an opening (74) for a screw bolt (78), which can be screwed into a sliding nut in the C profile section.

11. System according to one of claims 1 through 10, **characterized in that** the holding section (76) carries a pipe clamp (76).

12. System according to claims 3, 4, 5, 7 or 10, **characterized in that** screw bolts and sliding nuts are provided as a pre-installable unit and an elongated hole in the outer telescoping part or appendage runs parallel to the slit of a C-shaped rail part, wherein the elongated sliding nut can be inserted through the elongated hole into the inside of the C-shaped rail part.

13. System according to claim 12, **characterized in that** a spring arrangement works between the head of the screw bolt and the sliding nut, whereby the C-shaped rail part can be temporarily immobilized in a clamping manner before a final immobilization takes place through the tightening of the screw bolt.

14. System according to one of claims 2 through 13, **characterized in that** on the outside of the outer telescoping part (30) a C-shaped rail (42) with an inward bent edge is attached in the slit area parallel to the axis of the telescoping part (30).

15. System according to one of claims 3 through 14, **characterized in that** several holes are provided on the side of the C rail lying opposite the slit for the attachment of further components.

16. System according to one of claims 1 through 15, **characterized in that** the bearing component (22) on opposite-lying sides of the guide has bearing appendages (46, 48) with a hole (50), a screw bolt can be inserted through the hole (50), which can be screwed into a sliding nut in the C-shaped rail (18).

17. System according to one of claims 1 through 16, **characterized in that** the guide has two parallel guide channels, the openings of which are pointed towards each other and two parallel distanced sliding bars (66, 68) are provided on the carriage (24), which are almost suitably received in the guide channels.

## Revendications

1. Dispositif pour la suspension de tuyaux, conduits ou similaires à un plafond, en particulier le plafond d'un conteneur, comprenant les caractéristiques suivantes :
• au moins deux barres verticales (10) ajustables dans la longueur pouvant être montées à des endroits espacés au plafond,
• une entretoise (16) pouvant être montée aux extrémités inférieures des barres verticales (10) et
• au moins un composant de support (22) pouvant être fixé à différents endroits sur le dessus de l'entretoise (16) et qui retient au moins un élément de maintien (76) avec une section de maintien (26) qui enveloppe au moins en partie un tuyau ou un conduit ou similaire, **caractérisé en ce que**
• le composant de support (22) présente un guidage horizontal dans une direction transversale par rapport à l'entretoise (16), un coulisseau (24) est logé dans le guidage et peut s'y déplacer librement et présente au moins un appendice de guidage (72) vertical, dans lequel le au moins un élément de maintien (76) s'étend avec son axe parallèlement au guidage et que, en outre, l'élément de maintien (76) est guidé de manière à se déplacer verticalement dans l'appendice de guidage (72), l'appendice de guidage (72) et l'élément de maintien (76) présentent un profil de section transversale qui n'est pas rond et coopèrent de manière télescopique et un mécanisme de serrage (78) agit entre l'appendice de guidage (72) et l'élément de maintien (76) pour fixer par serrage l'élément de maintien (76) sur l'appendice de guidage (72) dans des positions à la hauteur que l'on veut.

2. Dispositif selon la revendication 1, **caractérisé en ce que** les barres verticales (10) sont composées de deux pièces (30, 34) télescopiques qui sont enfoncées l'une dans l'autre avec un profil de section transversale qui n'est pas rond et un mécanisme de serrage est placé au niveau de l'élément coulissant externe (30) pour la fixation par serrage de l'élément coulissant interne (34) dans des positions relatives que l'on veut.

3. Dispositif selon la revendication 2, **caractérisé en ce que** l'élément coulissant interne (34) est constitué en tant que rail en forme de C avec le bord replié vers l'intérieur dans la zone d'appui du rail en C qui engrène dans un profil de section transversale complémentaire de l'élément coulissant externe (30) et le mécanisme de serrage présente un écrou coulissant déplaçable à l'intérieur du rail en C, et un boulon fileté (40) peut être vissé dans l'écrou coulissant à travers un trou dans l'élément coulissant externe (30).

4. Dispositif selon la revendication 2 ou 3, **caractérisé en ce que** plusieurs trous sont prévus sur le côté du rail en C en face de la fente, pour placer d'autres composants.

5. Dispositif selon l'une des revendications 1 à 4, **caractérisé en ce que** l'entretoise (16) est constituée en tant que rail en forme de C (18) avec une fente tournée vers le haut, dans lequel des bords repliés vers l'intérieur sont prévus dans la zone de la fente, l'extrémité inférieure de la barre verticale (10) présente au moins un appendice latéral (36) avec un trou (38), un écrou coulissant est déplaçable dans le rail en forme de C (18) et un boulon fileté pouvant être passé à travers le trou (38) dans l'appendice latéral (36) peut être vissé dans l'écrou coulissant.

6. Dispositif selon la revendication 5, **caractérisé en ce que** l'entretoise (16) est constituée en tant que rail double en C avec une fente tournée vers le bas dans la seconde section de rail (20).

7. Dispositif selon la revendication 5 ou 6, **caractérisé en ce que** le composant de support (22) présente des appendices de support (46, 48) avec un trou (50) sur les côtés opposés du guidage, un boulon fileté, qui peut être vissé dans un écrou coulissant dans le rail en forme de C (18), peut être passé à travers le trou (50).

8. Dispositif selon l'une des revendications 1 à 7, **caractérisé en ce que** le guidage présente deux canaux de guidage parallèles dont les ouvertures sont tournées l'une vers l'autre et deux bordures coulissantes (66, 68) espacées parallèles, qui sont reçues de manière presque ajustée dans les canaux de guidage, sont prévues sur le coulisseau (24).

9. Dispositif selon la revendication 8, **caractérisé en ce que** des inserts (62, 64) en matière plastique, dans lesquels les canaux de guidage sont constitués, sont placés dans des sections en forme de U (48, 50) du composant de support (22).

10. Dispositif selon l'une des revendications 1 à 9, **caractérisé en ce que** l'élément de maintien (76) présente une section de profil de section transversale en forme de C, avec un bord replié vers l'intérieur dans la zone de fente et l'appendice de guidage (72) présente une ouverture (74) pour un boulon fileté (78) qui peut être vissé dans l'écrou coulissant dans la section de profil en C.

11. Dispositif selon l'une des revendications 1 à 10, **caractérisé en ce que** la section de maintien (76) porte un collier d'attache pour tuyaux (76).

12. Dispositif selon les revendications 3, 4, 5, 7 ou 10, **caractérisé en ce que** le boulon fileté et l'écrou coulissant sont prévus en tant qu'unité prémontable et un trou oblong dans l'élément coulissant externe ou appendice est parallèle à la fente de la pièce de rail en forme de C, ce par quoi l'écrou coulissant oblong peut être introduit à travers le trou oblong dans l'intérieur de la pièce de rail en forme de C.

13. Dispositif selon la revendication 12, **caractérisé en ce qu'**un arrangement à ressort agit entre la tête du boulon fileté et l'écrou coulissant, ce par quoi la pièce de rail en forme de C peut être temporairement fixée par serrage, avant qu'une fixation définitive n'ait lieu par le serrage du boulon fileté.

14. Dispositif selon l'une des revendications 2 à 13, **caractérisé en ce qu'**un rail en forme de C (42) est placé sur la face extérieure de l'élément coulissant externe (30) avec le bord replié vers l'intérieur dans la zone de la fente de manière parallèle à l'axe de l'élément coulissant (30).

15. Dispositif selon l'une des revendications 3 à 14, **caractérisé en ce que** plusieurs trous sont prévus sur le côté en face de la fente du rail en C pour placer d'autres composants.

16. Dispositif selon l'une des revendications 1 à 15, **caractérisé en ce que** le composant de support (22) présente des appendices de support (46, 48) avec un trou (50) à des côtés opposés du guidage, un boulon fileté, qui peut être vissé dans un écrou coulissant dans un rail en forme de C (18), peut être passé à travers le trou (50).

17. Dispositif selon l'une des revendications 1 à 16, **caractérisé en ce que** le guidage présente deux canaux de guidage parallèles dont les ouvertures sont tournées l'une vers l'autre et deux bordures coulissantes (66, 68) espacées parallèles, qui sont reçues de manière presque ajustée dans les canaux de guidage, sont prévues sur le coulisseau (24).
